# EUROPÄISCHE PATENTSCHRIFT

(11) **EP 4 065 428 B1**
(45) Veröffentlichungstag und Bekanntmachung des Hinweises auf die Patenterteilung: **19.08.2026**
(21) Anmeldenummer: 20804518.7
(22) Anmeldetag: 10.11.2020
(51) Int. Cl.: B60R 25/045, B60R 25/10, B60R 25/30, B60R 25/24

(54) **VERFAHREN ZUM BETREIBEN EINES FAHRZEUGS, VORRICHTUNG UND FAHRZEUG**
METHOD FOR OPERATING A VEHICLE, DEVICE AND VEHICLE
PROCÉDÉ DE FONCTIONNEMENT D'UN VÉHICULE, DISPOSITIF ET VÉHICULE

(30) Priorität: 26.11.2019 DE 102019131946
(43) Veröffentlichungstag der Anmeldung: 05.10.2022
(73) Patentinhaber: Bayerische Motoren Werke Aktiengesellschaft, 80809 München (DE)
(72) Erfinder: KRAEMER, Oliver, 85293 Reichertshausen (DE)
(86) Internationale Anmeldenummer: PCT/EP2020/081629
(87) Internationale Veröffentlichungsnummer: WO 2021/104850

(56) Entgegenhaltungen:
- EP-A2- 0 610 902
- US-A1- 2018 186 334

## Beschreibung

Die vorliegende Anmeldung betrifft ein Verfahren zum Betreiben eines Fahrzeugs, eine Vorrichtung und ein Fahrzeug.

Für Fahrzeuge stehen so genannte schlüssellose Zugangssysteme (keyless access systems) zur Verfügung, bei denen der Nutzer des Fahrzeugs durch Mitführen eines Zugangselements einen Zugang zum Fahrzeug erhält, ohne dass das Zugangselement hierfür betätigt werden muss. Nach erfolgreich absolvierter Zugangskontrolle und dem Starten des Motors kann das Fahrzeug auch dann genutzt werden, wenn das Zugangselement im Fahrzeug nicht oder nicht mehr vorhanden ist.

EP0610902A2 offenbart eine Diebstahlsicherungsvorrichtung für ein Kraftfahrzeug, bei der eine persönliche Identifikationseinheit von einem autorisierten Bediener des Kraftfahrzeugs getragen wird und Mittel zur Identifizierung seines Standorts in der Nähe des Kraftfahrzeugs enthält. Eine Fahrzeugsteuereinheit, die an dem Kraftfahrzeug angebracht ist, hat einen ersten und einen zweiten Zustand mit Mitteln, die den Betrieb des Kraftfahrzeugs ermöglichen, wenn sich die Steuereinheit in dem ersten Zustand befindet, und mit Mitteln, die den Betrieb des Kraftfahrzeugs verhindern, wenn sich die Steuereinheit in dem zweiten Zustand befindet, und mit Mitteln, die die Steuereinheit in den zweiten Zustand versetzen, wenn die Identifikationsvorrichtung aus der Nähe des Kraftfahrzeugs entfernt wurde. US20180186334A1 offenbart ein Kraftfahrzeugverwaltungssystem, das eine Diebstahlprävention auf der Grundlage von Kontextinformationen bietet. Die Plattform zur Verwaltung des Kraftfahrzeugs umfasst Sensorgeräte, die Eingabedaten bereitstellen können, um einen Kontext des Fahrzeugs und eines Fahrzeugführers zu bestimmen. Der Kontext kann Standortinformationen des Kraftfahrzeugs und eine Identität des Betreibers des Kraftfahrzeugs umfassen. Auf der Grundlage von Berechtigungen für den Betreiber kann das System feststellen, ob ein Kontext des Fahrzeugs Berechtigungen für den identifizierten Betreiber verletzt.

Eine Aufgabe ist es, die unbefugte Benutzung eines Fahrzeugs zu erschweren.

Diese Aufgabe wird durch ein Verfahren zum Betreiben eines Fahrzeugs, eine Vorrichtung und ein Fahrzeug gemäß den unabhängigen Patentansprüchen gelöst. Weitere Ausgestaltungen und Zweckmäßigkeiten sind Gegenstand der abhängigen Patentansprüche.

Es wird ein Verfahren zum Betreiben eines Fahrzeugs, beispielsweise eines Kraftfahrzeugs, angegeben.

In dem Verfahren wird im Betrieb des Fahrzeugs ein Vorhandensein eines zugeordneten Berechtigungselements in dem Fahrzeug überwacht. Insbesondere erfolgt die Überwachung auf Vorhandensein des zugeordneten Berechtigungselements während der Fahrt, also auch nach dem Starten des Motors.

Als zugeordnetes Berechtigungselement wird allgemein ein Element bezeichnet, das ein Nutzer des Fahrzeugs, zu dem das Berechtigungselement gehört, bei sich führen kann und das in der Lage ist, ein Berechtigungssignal an ein fahrzeugseitiges Steuergerät zu senden. Beispielsweise ist das Berechtigungselement als Teil eines Schlüsselanhängers oder als Schlüsselanhänger ausgebildet. Mit anderen Worten stellt das zugeordnete Berechtigungselement einen "elektronischen Schlüssel" für eine Berechtigungsprüfung zur Nutzung des Fahrzeugs dar, etwa für einen Zugang zum Innenraum des Fahrzeugs und/oder des Kofferraums und/oder für das Starten des Motors. Für ein Fahrzeug können auch mehrere Berechtigungselemente zugeordnet sein, beispielsweise für einen oder mehrere vom Eigentümer des Fahrzeugs autorisierte Personen.

In dem Verfahren wird das Fahrzeug in einem Sicherungszustand betrieben, wenn kein zugeordnetes Berechtigungselement erkannt wird. Das Fahrzeug kann also von einem Normalzustand in den Sicherungszustand versetzt werden, wenn die Prüfung auf ein zugeordnetes Berechtigungselement nicht erfolgreich ist. Mit anderen Worten stellt der Sicherungszustand einen Betriebsmodus dar, mit dem auf eine Abweichung vom Normalzustand reagiert wird.

In dem Verfahren wird im Sicherungszustand zumindest ein Leistungsparameter des Fahrzeugs zumindest zeitweise modifiziert. Als Leistungsparameter wird allgemein ein Parameter angesehen, der direkten oder indirekten Einfluss auf die Leistungsfähigkeit des Fahrzeugs hat. Insbesondere wird der zumindest eine Leistungsparameter derart modifiziert, dass die Leistungsfähigkeit des Fahrzeugs im Sicherungszustand gegenüber der Leistungsfähigkeit des Fahrzeugs im Normalzustand verringert ist. Im Sicherungszustand wird das Fahrzeug also zumindest zeitweise in einen Zustand versetzt, in dem die Leistungsfähigkeit des Fahrzeugs gezielt verringert ist. Beispielsweise hat der Leistungsparameter direkt oder indirekt Einfluss auf das Vorwärtskommen des Fahrzeugs. Zum Beispiel wird ein Leistungsparameter zumindest zeitweise auf einen Wert von höchstens 70 % des ursprünglichen Werts reduziert. Zum Beispiel beträgt der Wert nach Ablauf einer vorgegebenen Zeit seit Beginn des Sicherungszustands, beispielsweise nach einer Minute, zwischen einschließlich 40 % und einschließlich 60 %, etwa 50 % des ursprünglichen Werts im Normalzustand. Nachfolgend kann der zumindest eine Leistungsparameter weiter gedrosselt werden, beispielsweise auf höchstens 20 % oder höchstens 10 **%.**

In dem Verfahren ändert sich ein Berechtigungscode zeitlich. Ein zugeordnetes Berechtigungselement sendet also nicht durchgängig denselben Berechtigungscode, sondern einen sich zeitlich ändernden Berechtigungscode. Unbefugten wird es dadurch erschwert, ein zugeordnetes Berechtigungselement zu simulieren.

In mindestens einer Ausführungsform des Verfahrens zum Betreiben eines Fahrzeugs wird im Betrieb des Fahrzeugs ein Vorhandensein eines zugeordneten Berechtigungselements überwacht und das Fahrzeug wird in einem Sicherungszustand betrieben, wenn kein zugeordnetes Berechtigungselement erkannt wird. Im Sicherungszustand wird zumindest zeitweise zumindest ein Leistungsparameter des Fahrzeugs modifiziert.

Auch nach Starten des Fahrzeugs erfolgt also eine Überprüfung, ob ein zugeordnetes Berechtigungselement im Fahrzeuginneren vorhanden ist. Bei einer Nutzung des Fahrzeugs durch einen Unbefugten, der nicht in Besitz eines zugeordneten Berechtigungselements ist, kann das Fortkommen mit dem Fahrzeug durch das Versetzen des Fahrzeugs in den Sicherungszustand erheblich erschwert werden, insbesondere im Vergleich zu einem Fahrzeug mit einem konventionellen Fahrzeugsicherungssystem, bei dem ein Unbefugter ein Fahrzeug mit laufenden Motor ohne Einschränkungen nutzen kann, solange der Motor nicht abgestellt wird. Das Fahrzeug kann im ungünstigen Fall schnell und über große Entfernungen an einen für den unbefugten Nutzer sicheren Ort und/oder über Landesgrenzen gefahren werden.

Gemäß zumindest einer Ausführungsform des Verfahrens wird der zumindest eine Leistungsparameter in Abhängigkeit von einer Zeitdauer seit Beginn des Sicherungszustands gedrosselt. Beispielsweise wird der Leistungsparameter zumindest zeitweise rampenförmig gedrosselt. Zum Beispiel erfolgt die Drosselung stufenlos oder zumindest in so kleinen Stufen, dass das Fahrzeug nicht ruckartig gebremst wird. Dadurch kann vermieden werden, dass sich durch die Drosselung des Leistungsparameters eine Gefahr für das Fahrzeug oder andere Verkehrsteilnehmer ergibt.

Gemäß zumindest einer Ausführungsform des Verfahrens wird der zumindest eine Leistungsparameter in einem ersten Stadium des Sicherungszustand mit einer betragsmäßig geringeren Steigung gedrosselt als in einem dem ersten Stadium zeitlich nachfolgenden zweiten Stadium. Im Zweifel beziehen sich die angegebenen Steigungen jeweils auf die mittleren Steigungen in den jeweiligen Stadien. Das erste Stadium beginnt beispielsweise unmittelbar zu Beginn des Sicherungszustands, also zu dem Zeitpunkt, an dem kein zugeordnetes Berechtigungselement mehr erkannt wird.

Vorzugsweise erfolgt im ersten Stadium keine oder keine signifikante Modifizierung, insbesondere Drosselung des zumindest einen Leistungsparameters. Das erste Stadium stellt also eine Wartezeit dar, in der die Weiterfahrt uneingeschränkt oder zumindest weitgehend uneingeschränkt möglich ist. Wenn die Erkennung des zugeordneten Berechtigungselements aufgrund einer kurzfristigen Störung der Datenübertragung erfolglos war und diese Störung innerhalb des ersten Stadiums behoben wird, kann das Fahrzeug von Sicherungszustand zurück in den Normalzustand versetzt werden, ohne dass sich für den berechtigten Fahrer des Fahrzeugs Einschränkungen im Fahrkomfort ergeben. Beispielsweise beträgt eine Dauer des ersten Stadiums zwischen einschließlich 5 Sekunden und einschließlich 1 Minute. Der Sicherungszustand kann auch mehr als zwei Stadien aufweisen, wobei die Steigung des Leistungsparameters zwischen den Stadien jeweils variieren kann.

Gemäß zumindest einer Ausführungsform des Verfahrens wird während des Sicherungszustands einen Hinweis an den Fahrer ausgegeben, dass das Berechtigungselement nicht erkannt wird. Dieser Hinweis erfolgt zweckmäßigerweise noch während des ersten Stadiums des Sicherungszustands. Der Fahrer kann daraufhin mögliche Ursachen für das Nichterkennen des Berechtigungselements prüfen und gegebenenfalls beheben.

Gemäß zumindest einer Ausführungsform des Verfahrens wird die Überwachung des Vorhandenseins des zugeordneten Berechtigungselements im Betrieb des Fahrzeugs wiederkehrend durchgeführt. Beispielsweise erfolgt die Überwachung kontinuierlich oder in regelmäßigen Abständen, etwa in Abständen zwischen einschließlich 0,1 Sekunde und einschließlich 30 Sekunden. Je kürzer der Abstand zwischen zwei Überprüfungen ist, desto schneller kann das Fahrzeug in den Sicherungszustand versetzt werden.

Gemäß zumindest einer Ausführungsform des Verfahrens erfolgt zur Überwachung des Vorhandenseins des zugeordneten Berechtigungselements ein Paarungsversuch zwischen einem Berechtigungssteuergerät des Fahrzeugs und dem zugeordneten Berechtigungselement, insbesondere mittels einer drahtlosen Verbindung. Beispielsweise erfolgt die drahtlose Verbindung über Funk, etwa im kHz- oder MHz-Bereich, Bluetooth, Nahfeld-Kommunikation (Near Field Communication, NFC) oder WLAN (Wireless Local Area Network).

Gemäß zumindest einer Ausführungsform des Verfahrens ist der zumindest eine Leistungsparameter ein Parameter, der eine Motorsteuerung des Fahrzeugs beeinflusst. Beispielsweise ist der Leistungsparameter eine maximale Geschwindigkeit oder ein maximales Drehmoment des Fahrzeugs. Im Sicherungszustand kann also eine gezielte elektronische Drosselung der Leistungsfähigkeit des Motors erfolgen.

Beispielsweise wird die maximale Geschwindigkeit zumindest zeitweise auf einen Wert zwischen einschließlich 40 und einschließlich 80 km/h, vorzugsweise zwischen einschließlich 50 und einschließlich 70 km/h gedrosselt. Bei einem fehlerhaften Nichterkennen des Berechtigungselements kann sich der Fahrer des Fahrzeugs an einen sicheren Ort begeben, beispielsweise einen nahe gelegenen Parkplatz. Gleichzeitig ist die gedrosselte maximale Geschwindigkeit so gering, dass das Fortkommen über größere Strecken unmöglich oder zumindest stark eingeschränkt ist.

Gemäß zumindest einer Ausführungsform des Verfahrens werden zwei oder mehr Leistungsparameter des Fahrzeugs im Sicherungszustand modifiziert, insbesondere gedrosselt. Beispielsweise erfolgt eine Drosselung der maximalen Geschwindigkeit und des maximalen Drehmoments. Die Modifizierung der Leistungsparameter kann hierbei über unterschiedliche Zeiträume des Sicherungszustands und/oder mit unterschiedlichen Steigungen durchgeführt werden.

Gemäß zumindest einer Ausführungsform des Verfahrens erfolgt ein Wechsel von dem Sicherungszustand in den Normalzustand des Fahrzeugs wenn das zugeordnete Berechtigungselement wieder erkannt wird. Der berechtigte Fahrer kann das Fahrzeug also wieder mit der ursprünglichen vollen Leistungsfähigkeit nutzen.

Weiterhin wird eine Vorrichtung angegeben, die dazu ausgebildet ist, das vorstehend beschriebene Verfahren durchzuführen. Die Vorrichtung weist ein Steuergerät auf, das Mittel zur Ausführung des Verfahrens umfasst. Beispielsweise ist das Verfahren als ein Computerprogramm implementiert, wobei die Ausführung des Computerprogramms durch die Vorrichtung das Fahrzeug, insbesondere die Vorrichtung, dazu veranlasst, das Verfahren auszuführen. Die Vorrichtung steht in einer Datenverbindung zu einem Berechtigungssteuergerät des Fahrzeugs.

Gemäß zumindest einer Ausführungsform der Vorrichtung ist die Vorrichtung ein Motorsteuergerät des Fahrzeugs oder steht in einer Datenverbindung zu einem Motorsteuergerät des Fahrzeugs. Dadurch kann ein besonders direkter Eingriff in die Leistungsfähigkeit des Fahrzeugs, insbesondere die Leistungsfähigkeit des Motors vorgenommen werden. Für Unbefugte wird eine Nutzung des Fahrzeugs dadurch weiter erschwert.

Weiterhin wird ein Fahrzeug mit einer vorstehend beschriebenen Vorrichtung angegeben.

Gemäß einer Ausführungsform des Fahrzeugs ist das zugeordnete Berechtigungselement dazu eingerichtet, einem Fahrer handhabungsfrei Zugang zu dem Fahrzeug zu ermöglichen, insbesondere den Fahrzeugbetrieb zu ermöglichen. Handhabungsfrei bedeutet in diesem Zusammenhang, dass der Fahrer lediglich das zugeordnete Berechtigungselement bei sich führen muss, um das Fahrzeug nutzen zu können. Dem Fahrer steht also ein überaus komfortabler Zugang zur Nutzung des Fahrzeugs zur Verfügung, wobei gleichzeitig die Nutzung und insbesondere das Fortkommen nach Entwenden des Fahrzeugs durch Unbefugte erheblich erschwert sind.

Weitere Ausgestaltungen und Zweckmäßigkeiten ergeben sich aus der nachfolgenden Beschreibung der Ausführungsbeispiele in Verbindung mit den Figuren.

Es zeigen:
Figur 1 eine Veranschaulichung des Funktionsprinzips eines Verfahrens anhand eines exemplarischen Verlaufs;
Figur 2 eine schematische Darstellung einer Funktionslogik für ein Verfahren gemäß einem Ausführungsbeispiel;
Figur 3 eine schematische Darstellung einer Funktionslogik für ein Verfahren gemäß einem Ausführungsbeispiel; und
Figur 4 ein Ausführungsbeispiel für ein Fahrzeug mit einer Vorrichtung zur Durchführung des Verfahrens.

Die Figuren sind jeweils schematische Darstellungen und daher nicht maßstabsgetreu. Vielmehr können einzelne Elemente zur verbesserten Darstellung und/oder zum verbesserten Verständnis übertrieben groß dargestellt sein.

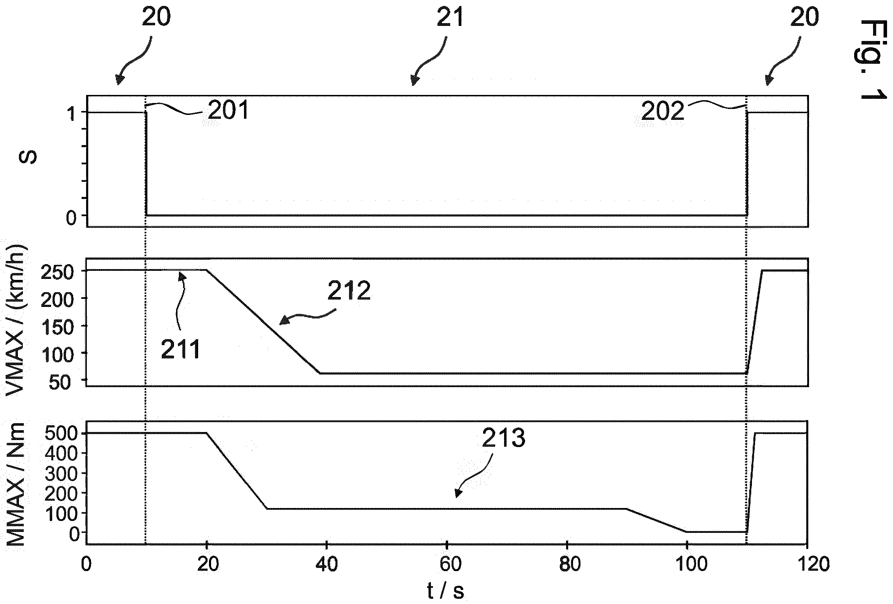

In Figur 1 ist ein exemplarischer Ablauf für ein beschriebenes Verfahren dargestellt, wobei ein logisches Signal S mit den Signalwerten 1 oder 0, eine maximale Geschwindigkeit VMAX in km/h und ein maximales Drehmoment MMAX in Nm jeweils als Funktion der Zeit t in Sekunden aufgetragen sind.

Das Signal S repräsentiert hierbei das Ergebnis auf Prüfung des Vorhandenseins eines zugeordneten Berechtigungselements, wobei beispielhaft der Signalwert 1 für eine erfolgreiche Prüfung und der Signalwert 0 für eine erfolglose Prüfung steht.

Zum Zeitpunkt t=0 wird ein zugeordnetes Berechtigungselement erkannt. Dementsprechend liegt ein Normalzustand 20 vor. Zu einem ersten Zeitpunkt 201 wird kein zugeordnetes Berechtigungselement mehr erkannt. Das Signal S fällt von dem ursprünglichen Signalwert 1 auf 0.

Zu diesem ersten Zeitpunkt 201 erfolgt ein Wechsel in einem Sicherungszustand 21. In einem ersten Stadium 211 des Sicherungszustands 21 erhält ein Fahrer des Fahrzeugs beispielsweise einen Hinweis, dass kein zugeordnetes Berechtigungselement mehr erkannt worden ist. Innerhalb des ersten Stadiums 211 erfolgt jedoch noch kein Eingriff in die Leistungsparameter des Fahrzeugs, so dass der Fahrer für kurze Zeit ohne Einschränkungen weiterfahren kann, in dem gezeigten Beispiel für 10 Sekunden. Insbesondere würde der Fahrer keine Einschränkungen im Komfort erfahren, wenn das zugeordnete Berechtigungselement nur kurzzeitig aufgrund einer Störung nicht korrekt erkannt wurde und diese Störung während der Zeitdauer des ersten Stadiums 211 endet.

In einem zweiten Stadium 212 des Sicherungszustands 21 werden sowohl die maximale Geschwindigkeit VMAX als auch das maximale Drehmoment MMAX rampenförmig reduziert. Durch die rampenförmige Verringerung der maximalen Geschwindigkeit VMAX wird ein abruptes Abbremsen des Fahrzeugs und eine damit einhergehende mögliche Gefährdung des Fahrers oder andere Verkehrsteilnehmer vermieden. Beispielsweise wird die maximale Geschwindigkeit auf 60 km/h abgesenkt.

Das maximale Drehmoment MMAX wird exemplarisch in zwei Schritten rampenförmig abgesenkt, wobei das maximale Drehmoment nach Ablauf der ersten Rampe, exemplarisch zum Zeitpunkt t = 30 s, auf einem von Null verschiedenen unteren Schwellwert 213, exemplarisch etwa 100 Nm, liegt, welcher hoch genug ist, dass sich der Fahrer durch eine Beschleunigung aus einer Gefahrensituation entfernen kann. Während der zweiten Rampe, exemplarisch zwischen t = 90 s und t = 100 s, wird das maximale Drehmoment MMAX kontinuierlich auf 0 abgesenkt, so dass der Motor des Fahrzeugs keinerlei positive Beschleunigung mehr ermöglicht.

Im Sicherungszustand 21, insbesondere nach Ablauf des ersten Stadiums 211, wird die Leistungsfähigkeit des Fahrzeugs also erheblich eingeschränkt. Selbst wenn es einem Unbefugten also gelungen ist, Zugang zum Fahrzeug zu erhalten und den Motor zu starten, wird durch die wiederkehrende Überwachung auf Vorhandensein eines zugeordneten Berechtigungselements während der Fahrt sichergestellt, dass ein Wechsel in den Sicherungszustand erfolgt und ein Wegfahren mit dem Fahrzeug vom Ort des Diebstahls nur stark eingeschränkt möglich ist.

Gleichzeitig ist sichergestellt, dass ein berechtigter Fahrer für den Fall, dass sein zugeordnetes Berechtigungselement aufgrund einer Störung nicht mehr erkannt wird, das Fahrzeug trotz der Einschränkung der Leistungsfähigkeit des Fahrzeugs noch an einen sicheren Ort bewegen kann.

Weiterhin ist in Figur 1 der Fall veranschaulicht, dass ein zugeordnetes Berechtigungselement wieder erkannt wird.

Zu einem zweiten Zeitpunkt 202 ist die Prüfung auf Erkennung eines zugeordneten Berechtigungselements erfolgreich und das Signal S steigt dementsprechend auf den zugeordneten ursprünglichen Signalwert 1. Es erfolgt ein Wechsel von Sicherungszustand 21 in den Normalzustand 20. Die maximale Geschwindigkeit VMAX und das maximale Drehmoment MMAX können wieder auf das ursprüngliche Niveau gesteigert werden. Zweckmäßigerweise erfolgt dies derart, dass keine vom Fahrer unbeabsichtigte plötzliche Beschleunigung oder eine abrupte Steigerung der Geschwindigkeit des Fahrzeugs auftritt. Beispielsweise werden die maximale Geschwindigkeit VMAX und das maximale Drehmoment MMAX rampenförmig gesteigert. Die Steigung kann hierbei betragsmäßig auch größer sein als beim Wechsel vom Normalzustand 20 in den Sicherungszustand 21.

Selbstverständlich können verschiedene Modifikationen des exemplarischen Verlaufs vorgenommen werden, ohne von der Grundidee der vorliegenden Anmeldung abzuweichen. Beispielsweise kann auch nur ein Leistungsparameter, etwa nur die maximale Geschwindigkeit oder nur das maximale Drehmoment oder auch ein anderer Leistungsparameter modifiziert werden.

Auch die Höhe des Leistungsparameters oder der Leistungsparameter im Sicherungszustand 21 und die Steigung des Leistungsparameters oder der Leistungsparameter können abweichen. Beispielsweise kann die Steigung nicht konstant, sondern zumindest zeitweise in Abhängigkeit von der Zeit variieren.

Weiterhin kann auch bereits im ersten Stadium 211 des Sicherungszustands 21 eine Modifikation eines oder mehrerer Leistungsparameter erfolgen. Zweckmäßigerweise ist jedoch die betragsmäßige Steigung des Leistungsparameters im ersten Stadium 211 kleiner als im darauf folgenden zweiten Stadium 212.

Auch die Dauer des ersten Stadiums 211 kann variiert werden und beispielsweise zwischen einschließlich 5 Sekunden und einschließlich 1 Minute betragen. Weiterhin ist auch denkbar, das erste Stadium 211 wegzulassen.

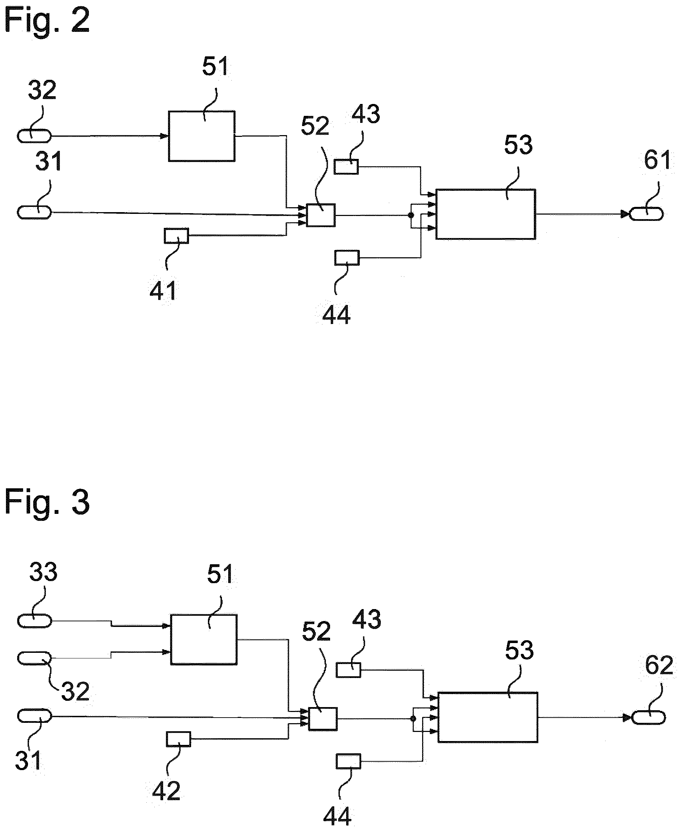

In Figur 2 ist eine Funktionslogik veranschaulicht, bei der die maximale Geschwindigkeit als Leistungsparameter im Sicherungszustand modifiziert wird.

Die Funktionslogik erhält als variable Eingänge einen Status der Berechtigungserkennung 31 und eine Zeit 32 seit Beginn des Sicherungszustands. Die Zeit 32 seit Beginn des Sicherungszustands wird einem Kennfeld 51 zugeführt. Der Status der Berechtigungserkennung 31 wird einer Statusprüfung 52 zugeführt. Weiterhin erhält die Funktionslogik Parameter für die maximale Geschwindigkeit im Normalzustand 41, einen positiven Gradientenfaktor 43 und einen negativen Gradientenfaktor 44.

Als Ausgang wird eine maximale Geschwindigkeit 61 ausgegeben. Für den Fall, dass der Status der Berechtigungserkennung 31 positiv ist, entspricht die maximale Geschwindigkeit 61 der maximalen Geschwindigkeit im Normalzustand 41.

Anderenfalls, also im Sicherungszustand, wird die maximale Geschwindigkeit in Abhängigkeit von der Zeit 32 seit Beginn des Sicherungszustands mittels des Maximalwertbilders 51 und des Gradientenbilders 53 modifiziert.

In Figur 3 ist eine entsprechende Funktionslogik gezeigt, bei der das maximale Drehmoment als Leistungsparameter im Sicherungszustand modifiziert wird.

Diese Funktionslogik entspricht im Wesentlichen der im Zusammenhang mit Figur 2 beschriebenen Funktionslogik. Im Unterschied hierzu erhält die Funktionslogik als zusätzlichen variablen Eingang eine Motordrehzahl 33.

Weiterhin wird anstelle der maximalen Geschwindigkeit das maximale Drehmoment 42 im Normalzustand als Parameter vorgegeben. Als Ausgang liefert die Funktionslogik ein maximales Drehmoment 62, dass in Abhängigkeit vom Status der Erkennung eines zugeordneten Berechtigungselements das maximale Drehmoment im Normalzustand oder ein reduziertes maximales Drehmoment ist.

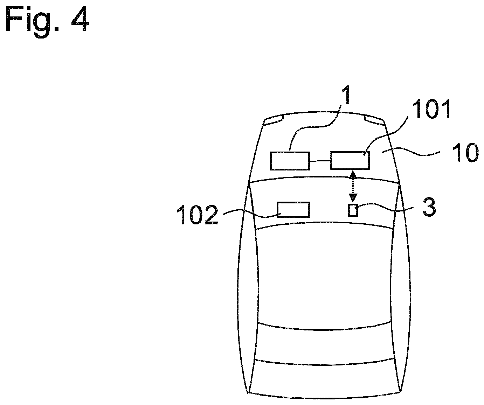

In Figur 4 ist ein Ausführungsbeispiel für ein Fahrzeug 10 mit einer Vorrichtung 1 gezeigt, wobei die Vorrichtung dazu ausgebildet ist, das vorstehend beschriebene Verfahren durchzuführen. Beispielsweise ist die Vorrichtung 1 ein Motorsteuergerät des Fahrzeugs 10 oder die Vorrichtung steht in einer Datenverbindung zum Motorsteuergerät des Fahrzeugs.

Die Vorrichtung 1 steht in einer Daten-Verbindung mit einem Berechtigungssteuergerät 101, welches das Vorhandensein eines zugeordneten Berechtigungselements 3 im Innenraum des Fahrzeugs 10 überwacht und der Vorrichtung ein entsprechendes Signal liefert. Derartige Berechtigungsprüfsysteme werden auch als Keyless-Go oder als Komfortzugang bezeichnet.

Falls im Betrieb des Fahrzeugs kein zugeordnetes Berechtigungselement 3 erkannt wird, kann der Fahrer des Fahrzeugs hierüber informiert werden, beispielsweise durch einen entsprechenden Hinweis auf einer Anzeigevorrichtung 102 im Sichtfeld des Fahrers.

Das zugeordnete Berechtigungselement **3,** beispielsweise in Form eines Schlüsselanhängers oder eines mobilen elektronischen Geräts, ist insbesondere dazu ausgebildet, einem berechtigten Fahrer des Fahrzeugs 10 handhabungsfrei, also nur durch Mitsichführen, Zugang zum Innenraum des Fahrzeugs 10 und das Starten des Motors zu ermöglichen. Hierfür erfolgt beispielsweise eine Paarung zwischen dem zugeordneten Berechtigungselement 3 und dem Berechtigungssteuergerät. Ein seitens des Berechtigungssteuergeräts 101 akzeptierter Berechtigungscode kann sich zur Steigerung der Sicherheit der Berechtigungsprüfung zeitlich ändern.

Insgesamt kann mit dem beschriebenen Verfahren und einer solchen Vorrichtung eine Nutzung des Fahrzeugs durch Unbefugte erheblich erschwert werden, ohne den Bedienkomfort eines berechtigten Fahrers einzuschränken.

### Bezugszeichenliste

- 1: Vorrichtung
- 10: Fahrzeug
- 101: Berechtigungssteuergerät
- 102: Anzeigevorrichtung
- 20: Normalzustand
- 201: erster Zeitpunkt
- 202: zweiter Zeitpunkt
- 21: Sicherungszustand
- 211: erstes Stadium
- 212: zweites Stadium
- 213: unterer Schwellwert
- 31: Status der Berechtigungserkennung
- 32: Zeit seit Beginn des Sicherungszustands
- 33: Motordrehzahl
- 41: maximale Geschwindigkeit im Normalzustand
- 42: maximales Drehmoment im Normalzustand
- 43: positiver Gradientenfaktor
- 44: negativer Gradientenfaktor
- 51: Kennfeld/-linie
- 52: Statusprüfung
- 53: Gradientenbilder
- 61: maximale Geschwindigkeit
- 62: maximales Drehmoment

## Patentansprüche

1. Verfahren zum Betreiben eines Fahrzeugs (10), bei dem im Betrieb des Fahrzeugs ein Vorhandensein eines zugeordneten Berechtigungselements (3) in dem Fahrzeug überwacht wird und das Fahrzeug in einem Sicherungszustand (21) betrieben wird, wenn kein zugeordnetes Berechtigungselement erkannt wird, wobei im Sicherungszustand zumindest ein Leistungsparameter des Fahrzeugs zumindest zeitweise modifiziert wird, wobei sich ein Berechtigungscode zeitlich ändert.

2. Verfahren nach Anspruch 1,
bei dem der zumindest eine Leistungsparameter in Abhängigkeit von einer Zeitdauer seit Beginn des Sicherungszustands gedrosselt wird.

3. Verfahren nach Anspruch 1 oder 2,
bei dem der zumindest eine Leistungsparameter in einem ersten Stadium (211) des Sicherungszustands mit einer betragsmäßig geringeren Steigung gedrosselt wird als in einem dem ersten Stadium zeitlich nachfolgendem zweiten Stadium (212).

4. Verfahren nach einem der vorherigen Ansprüche,
bei dem während des Sicherungszustands ein Hinweis an einen Fahrer des Fahrzeugs ausgegeben wird, dass das Berechtigungselement nicht erkannt wird.

5. Verfahren nach einem der vorherigen Ansprüche,
bei dem die Überwachung des Vorhandenseins des zugeordneten Berechtigungselements im Betrieb des Fahrzeugs wiederkehrend durchgeführt wird.

6. Verfahren nach einem der vorherigen Ansprüche,
bei dem zur Überwachung des Vorhandenseins des zugeordneten Berechtigungselements ein Paarungsversuch zwischen einem Berechtigungssteuergerät des Fahrzeugs und dem zugeordneten Berechtigungselement mittels einer drahtlosen Verbindung erfolgt.

7. Verfahren nach einem der vorherigen Ansprüche,
bei dem der Leistungsparameter eine maximale Geschwindigkeit oder ein maximales Drehmoment des Fahrzeugs ist.

8. Verfahren nach einem der vorherigen Ansprüche,
bei dem zwei oder mehr Leistungsparameter des Fahrzeugs im Sicherungszustand gedrosselt werden.

9. Verfahren nach einem der vorherigen Ansprüche,
bei dem der Leistungsparameter bis zu einer vorgegebenen Zeitdauer seit Beginn des Sicherungszustands höchstens bis zu einem unteren Schwellwert (213) gedrosselt wird.

10. Verfahren nach einem der vorherigen Ansprüche,
bei dem ein Wechsel von dem Sicherungszustand in einen Normalzustand des Fahrzeugs erfolgt, wenn das zugeordnete Berechtigungselement wieder erkannt wird.

11. Vorrichtung (1) mit einem Steuergerät umfassend Mittel zur Ausführung eines Verfahrens nach einem der vorhergehenden Ansprüche, wobei die Vorrichtung (1) in einer Daten-Verbindung mit einem Berechtigungssteuergerät (101) steht.

12. Vorrichtung nach Anspruch 11,
wobei die Vorrichtung (1) ein Motorsteuergerät des Fahrzeugs (10) ist oder in einer Datenverbindung zu einem Motorsteuergerät des Fahrzeugs (10) steht.

13. Fahrzeug (10) mit einer Vorrichtung (1) nach einem der Ansprüche 11 oder 12.

14. Fahrzeug (10) nach Anspruch 13, zusätzlich aufweisend das Berechtigungselement (3), wobei das Berechtigungselement (3) dazu eingerichtet ist, einem Fahrer handhabungsfrei Zugang zu dem Fahrzeug (10) zu ermöglichen, insbesondere den Fahrzeugbetrieb zu ermöglichen.

## Claims

1. Method for operating a vehicle (10), in which during operation of the vehicle a presence of an associated authorisation element (3) in the vehicle is monitored and the vehicle is operated in a secured state (21) when no associated authorisation element is detected, wherein in the secured state at least one performance parameter of the vehicle is at least temporarily modified, wherein an authorisation code changes with time.

2. Method according to claim 1,
in which the at least one performance parameter is throttled in dependence on a time duration since beginning of the secured state.

3. Method according to claim 1 or 2,
in which the at least one performance parameter is throttled in a first stage (211) of the secured state with a smaller gradient in absolute value than in a second stage (212) temporally following the first stage.

4. Method according to one of the preceding claims,
in which during the secured state a notification is output to a driver of the vehicle that the authorisation element is not detected.

5. Method according to one of the preceding claims,
in which the monitoring of the presence of the associated authorisation element is carried out recurrently during operation of the vehicle.

6. Method according to one of the preceding claims,
in which for monitoring the presence of the associated authorisation element a pairing attempt between an authorisation control unit of the vehicle and the associated authorisation element is effected by means of a wireless connection.

7. Method according to one of the preceding claims,
in which the performance parameter is a maximum speed or a maximum torque of the vehicle.

8. Method according to one of the preceding claims,
in which two or more performance parameters of the vehicle are throttled in the secured state.

9. Method according to one of the preceding claims,
in which the performance parameter is throttled at most down to a lower threshold value (213) up to a predetermined time duration since beginning of the secured state.

10. Method according to one of the preceding claims,
in which a change from the secured state to a normal state of the vehicle occurs when the associated authorisation element is detected again.

11. Apparatus (1) with a control unit comprising means for executing a method according to one of the preceding claims, wherein the apparatus (1) is in a data connection with an authorisation control unit (101).

12. Apparatus according to claim 11,
wherein the apparatus (1) is an engine control unit of the vehicle (10) or is in a data connection to an engine control unit of the vehicle (10).

13. Vehicle (10) with an apparatus (1) according to one of claims 11 or 12.

14. Vehicle (10) according to claim 13, additionally comprising the authorisation element (3), wherein the authorisation element (3) is configured to enable a driver to access the vehicle (10) without manual handling, in particular to enable vehicle operation.

## Revendications

1. Procédé pour faire fonctionner un véhicule (10), dans lequel pendant le fonctionnement du véhicule une présence d'un élément d'autorisation (3) associé dans le véhicule est surveillée et le véhicule est fait fonctionner dans un état de sécurisation (21) lorsqu'aucun élément d'autorisation associé n'est détecté, dans lequel dans l'état de sécurisation au moins un paramètre de performance du véhicule est au moins temporairement modifié, dans lequel un code d'autorisation change avec le temps.

2. Procédé selon la revendication 1,
dans lequel ledit au moins un paramètre de performance est réduit en fonction d'une durée de temps depuis le début de l'état de sécurisation.

3. Procédé selon la revendication 1 ou 2,
dans lequel ledit au moins un paramètre de performance est réduit dans un premier stade (211) de l'état de sécurisation avec une pente plus petite en valeur absolue que dans un deuxième stade (212) suivant temporellement le premier stade.

4. Procédé selon l'une des revendications précédentes,
dans lequel pendant l'état de sécurisation une notification est délivrée à un conducteur du véhicule que l'élément d'autorisation n'est pas détecté.

5. Procédé selon l'une des revendications précédentes,
dans lequel la surveillance de la présence de l'élément d'autorisation associé est effectuée de manière récurrente pendant le fonctionnement du véhicule.

6. Procédé selon l'une des revendications précédentes,
dans lequel pour surveiller la présence de l'élément d'autorisation associé une tentative d'appariement entre une unité de commande d'autorisation du véhicule et l'élément d'autorisation associé est effectuée au moyen d'une connexion sans fil.

7. Procédé selon l'une des revendications précédentes,
dans lequel le paramètre de performance est une vitesse maximale ou un couple maximal du véhicule.

8. Procédé selon l'une des revendications précédentes,
dans lequel deux ou plusieurs paramètres de performance du véhicule sont réduits dans l'état de sécurisation.

9. Procédé selon l'une des revendications précédentes,
dans lequel le paramètre de performance est réduit au plus jusqu'à une valeur de seuil inférieure (213) jusqu'à une durée de temps prédéterminée depuis le début de l'état de sécurisation.

10. Procédé selon l'une des revendications précédentes,
dans lequel un changement de l'état de sécurisation à un état normal du véhicule se produit lorsque l'élément d'autorisation associé est détecté à nouveau.

11. Dispositif (1) avec une unité de commande comprenant des moyens pour exécuter un procédé selon l'une des revendications précédentes, dans lequel le dispositif (1) est dans une connexion de données avec une unité de commande d'autorisation (101).

12. Dispositif selon la revendication 11,
dans lequel le dispositif (1) est une unité de commande de moteur du véhicule (10) ou est dans une connexion de données avec une unité de commande de moteur du véhicule (10).

13. Véhicule (10) avec un dispositif (1) selon l'une des revendications 11 ou 12.

14. Véhicule (10) selon la revendication 13, comprenant en outre l'élément d'autorisation (3), dans lequel l'élément d'autorisation (3) est configuré pour permettre à un conducteur d'accéder au véhicule (10) sans manipulation manuelle, en particulier pour permettre le fonctionnement du véhicule.
